# EUROPEAN PATENT SPECIFICATION

(11) **EP 3 265 016 B1**
(45) Date of publication and mention of the grant of the patent: **25.10.2023**
(21) Application number: 16710599.8
(22) Date of filing: 07.03.2016
(51) Int. Cl.: A61C 5/68, A61C 1/10, A61C 1/12

(54) **DENTAL MATERIAL DELIVERY SYSTEM**
ZAHNÄRZTLICHES MATERIALDOSIERSYSTEM
SYSTÈME D'ALIMENTATION DE MATÉRIAUX DENTAIRES

(30) Priority: 06.03.2015 US 201562129082 P
(43) Date of publication of application: 10.01.2018
(60) Divisional application: 21158177.2
(73) Proprietor: Dentsply Sirona Inc., York, PA 17401 (US)
(72) Inventor: PIERSON, Paul, R., Camden, DE 19934 (US); WEBER, Christoph, D-78464 Konstanz (DE); COVELESKI, Peter, Max, Lewes, DE 19958 (US); GUARAGNO, Kenneth, R., Spring Grove, PA 17362 (US); KARAZIVAN, Naim, Quebec J5Y 3V7 (CA); SIRKIS, James, Houston, DE 19954-2323 (US)
(74) Representative: Hartz, Nikolai
(86) International application number: PCT/US2016/021177
(87) International publication number: WO 2016/144868

(56) References cited:
- EP-A1- 1 736 113
- WO-A1-2011/025737
- WO-A1-2011/100852
- JP-A- 2004 016 707
- US-A- 3 559 961
- US-A- 3 715 806
- US-A- 3 724 077
- US-A- 3 792 530
- US-A- 4 138 816
- US-A- 5 620 423
- US-A1- 2004 045 982
- US-A1- 2006 227 653
- US-A1- 2007 251 839
- US-A1- 2012 265 209

## Description

### BACKGROUND

The process known in the prior art including activation of the capsule, transferring the capsule to the amalgam mixer, mixing the capsule, removing the capsule from the amalgam mixer and loading the capsule into a human powered dispensing device is laborious and time consuming and sometimes requires the help of a dental assistant. In some cases, the user requires up to three separate pieces of equipment to carry out this procedure. It is therefore the intent of the present invention, to combine these steps into an easy to use handpiece and capsule system that performs each of these functions and eliminates the need to transfer the capsule to individual devices for activation, mixing and dispensing.

US 2006/227653-A1 discloses a device and method for storing, mixing and dispensing components, comprising means for mixing a first component with a second, liquid component and for dispensing the mixture.

### SUMMARY

The present invention relates to the subject matter of claims 1 to 9.

Described herein is automatic powder/liquid applicator and capsule (APLA), collectively referred to as a delivery system, intended to replace the traditional amalgam mixer and powder/liquid dental capsules for mixing and dispensing powder/liquid dental materials such as cements and restoratives. The APLA delivery system consists of a new capsule and handpiece that are used in combination to activate, mix and apply the material contained in the capsule without the laborious need to transfer a capsule between several devices to accomplish the same result.

### BRIEF DESCRIPTION OF THE DRAWINGS

Fig. 1 shows a conceptual rendering of such a device and capsule.
Fig. 2 outlines the functional aspects described herein.
Fig. 3 shows a handpiece which establishes an orbit by rotating the capsule chamber (not claimed).
Fig. 4 is a cross section of one embodiment showing the capsule and handpiece mechanisms in the pre-activation stage.
Fig. 5 is an isometric view in the same configuration as shown in Fig. 4 demonstrating that the bearings and capsule chamber could be incorporated into the capsule design or remain as part of the handpiece design as described above.
Fig. 6 shows the main drive shaft of Fig. 4 after it has advanced into the plunger pocket which contains a mating gear interface.
Fig. 7 shows the assembly of Fig. 4 after activation.
Fig. 8 shows both drive shafts of Fig. 4 rotating to produce the planetary motion.
Fig. 9 shows the assembly of Fig. 4 in the dispensed state.
Fig. 10 shows the process known in the prior art.
Fig. 11 illustrates a powder/liquid capsule for producing planetary mixing motion (not claimed).
Fig. 12 illustrates an exploded view of the capsule of Fig. 11.
Fig. 13 illustrates a cross section of the capsule of Fig. 11.
Fig. 14 illustrates the capsule of Fig. 11 engaged with the hex drive and ring gear of the dispenser.
Fig. 15 illustrates a side view and an end view of the plunger driver of Fig. 11 and the eccentric axis of the post.
Fig. 16 illustrates a side view of a capsule in the filled/ready to activate stage.
Fig. 17 shows an exploded view of the capsule components of Fig. 16.
Fig. 18 is an isometric cross section view of the capsule of Fig. 16 in the filled/ready to activate stage.
Fig. 19 shows a cross section of the capsule of Fig. 16 as it would be loaded into a handpiece with the drive shaft pulling back the mixing disk to dislodge the liquid plug during activation.
Fig. 20 is a close up section view of the drive shaft of Fig. 16 after it has fully retracted and displaced the liquid seal into the retaining groove.
Fig. 21 is an illustration of mixing an activated capsule of Fig. 16.
Fig. 22a is an end view cross section illustrating how the holes are aligned by rotating the primary disk clockwise in the capsule of Fig. 21
Fig. 22b is an end view cross section illustrating how the holes are closed (misaligned) by rotating the primary disk counter-clockwise in a capsule of Fig. 23.
Fig. 23 shows the cartridge preparing to extrude the mixed paste of Fig. 16
Fig. 24 shows a cross section of a fully extruded capsule of Fig. 16.
Fig. 25 shows two alternatives that could be used together or independently.
Fig. 26 illustrates the donut-shaped liquid cup of Fig. 25 in the activated stage.
Fig. 27 shows an empty capsule of Fig. 25 with the paste fully dispensed.
Fig. 28 shows an end view of the collapsed blades of Fig. 27.
Fig. 29 illustrates an alternative where the primary and secondary disks effectively seal the liquid and powder in their respective compartments until activated.
Fig. 30 illustrates a side view of another capsule embodiment in the filled/ready to activate stage.
Fig. 31 shows an exploded view of the capsule components of Fig. 30.
Fig. 32 is an isometric cross section view of the capsule of Fig. 30 in the filled/ready to activate stage.
Fig. 33 shows a cross section of the capsule of Fig. 30 as it would be loaded into a handpiece with the hex drive positioned ready to engage the capsule plug.
Fig.34 illustrates the capsule of Fig. 30 after the hex drive has advanced forward and engaged the hex-shaped hole in the plug.
Fig. 35 illustrates an activated capsule of Fig. 30.
Fig. 36 shows a cross section of the capsule of Fig. 30 with the hex drive rotating to mix the powder and liquid components.
Fig. 37 illustrates a side view and cross section of the capsule as in Fig. 36.
Fig. 38 shows a capsule as in Fig. 36.
Fig. 39 illustrates the capsule of Fig. 30 dispensing the mixed paste as the hex drive advances, rupturing the body membrane.
Fig. 40 shows an empty capsule of Fig. 30 with the hex drive withdrawn.
Fig. 41 shows a cross-section of the blades of a capsule of Fig. 30 showing various leading edge configurations for mixing the paste during rotation.
Fig. 42 illustrates the dispenser system prior to capsule activation.
Fig. 43 illustrates the dispenser system of Fig. 42 after capsule activation.
Fig. 44 illustrates the dispenser system of Fig. 42 after paste dispensing.
Fig. 45 illustrates cross sectional views of Fig. 44.
Fig. 46 illustrates adispensing capsule wherein a magnetic field is used to manipulate internal steel balls to mix the paste.
Fig. 47 shows the capsule of Fig. 46 in the fully dispensed state.
Fig. 48 illustrates another dispenser system wherein the liquid component is stored and contained in the mixing shaft that also supports internal mixing blades.
Fig. 49 shows the capsule of Fig. 48 after activation.
Fig. 50 shows the capsule of Fig. 48 during mixing.
Fig. 51 shows the capsule of Fig. 48 after mixing and prior to extrusion.
Fig. 52 shows the capsule of Fig. 48 after extrusion of the mixed paste.
Fig. 53 shows the capsule of Fig. 48 in an empty state with the hand piece plunger withdrawn
Fig. 54 shows a cross section of a handpiece and capsule with an offset axis (not claimed).
Fig. 55 shows the capsule of Fig. 54.

### DETAILED DESCRIPTION

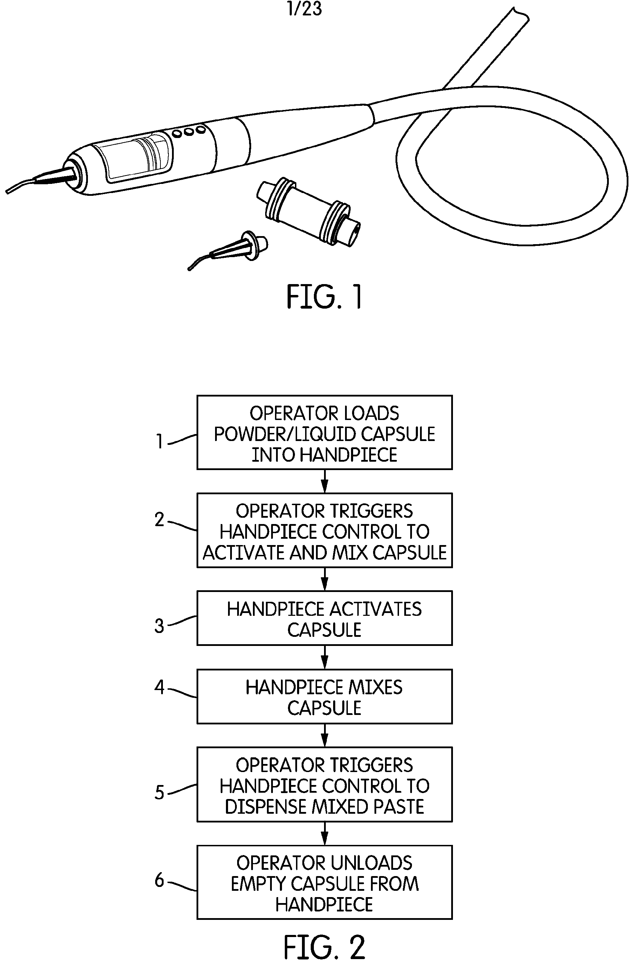

The diagram of Fig. 1 is a conceptual rendering of such a device and capsule, while the block diagram of Fig. 2 outlines the functional aspects described herein. There are numerous methods by which the device activates and mixes the capsule (block diagram steps 3 and 4) some of which are outlined here. The applicator disclosed herein includes a capsule having three main components: a capsule body, a liquid cup, and a plunger. The capsule may be pre-loaded with liquid and powder components for the desired dental product. The capsule may also have an integral dispensing tip, which acts as a conduit through which the mixed paste is delivered and for extending the reach of the device. If an integral tip is not used a separate dispensing tip may be used, which would include a mechanism for attaching the tip to the capsule.

The applicator system disclosed herein includes a handpiece having a variety of electro mechanical components including a drive shaft or other similar mechanisms such as a plunger, a battery capacitor or other such power source, a mechanism for mixing the capsule, a mechanism for incrementally advancing the drive shaft, a capsule compartment for loading and unloading the capsule, an opening loading and unloading the capsule, control buttons or similar operator interface controls to operate the handpiece (e.g. activate/mix, apply, etc.), an energy source such as the dental tubing on a chair-side, dental resource center.

One concept disclosed herein is an off-center capsule which consists of a capsule with an offset mixing chamber. The capsule is then spun on a main axis which is offset from the mixing chamber axis. Another concept disclosed herein is a planetary mixing capsule which consists of a mixing chamber that rotates while simultaneously orbiting an eccentric axis. The planetary motion can be produced entirely bv the handpiece or through a combination of capsule and handpiece features.

As shown in Figs. 1 and 54-55, the off-center capsule has two compartments, one mixing compartment which is prefilled with powder and another compartment for isolating the liquid during storage and transport. In the present disclosure, the two compartments are offset from the main axis, so that when the capsule is rapidly spun along the main axis, the materials are subjected to centrifugal forces, causing them to thoroughly intermix. In addition, because of the relatively low mass of the handpiece and the rapid rotation of the capsule, the handpiece will vibrate due to the offset mass of the capsule, which also contributes to the mixing action.

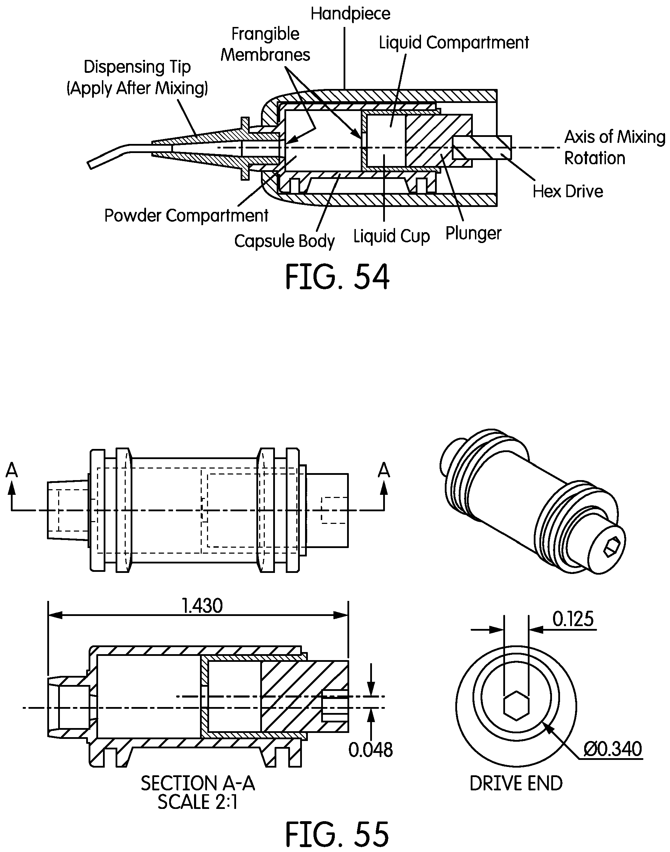

The liquid compartment (cup) has a plunger that is coaxial to the liquid compartment. The plunger has a hexagonal hole in the distal end for receiving the handpiece drive shaft. The hexagonal hole and drive shaft are positioned along the main axis of rotation. The axis of the liquid and mixing compartments are offset from the main axis of rotation (Fig. 55). The drive shaft is configured to engage the hexagonal hole. During activation, the plunger is pushed forward by the drive shaft, hydraulic force ruptures a first membrane on the liquid cup. The liquid is then displaced into the mixing chamber by the forward advancing plunger. The drive shaft stops advancing once the plunger reaches the bottom of the liquid cup completing the delivery of liquid into the mixing compartment. This process of bringing the liquid into the powder/mixing chamber is called activation (Fig. 2, step 3)

The capsule body has circular exterior flanges that are concentric with the main axis of rotation. The flange axis is coincidental to the main axis of rotation and is offset from the axis of the mixing compartment. The APLA handpiece has a compartment that is configured for receiving the APLA capsule in which the capsule can freely rotate (Fig. 54).

After activation, mixing is automatically initiated (Fig. 2, step 4) and the drive shaft begins to rotate rapidly, spinning the capsule about the main axis of rotation. Because the mixing compartment is offset from the main axis of rotation, the powder and liquid components are subjected to centrifugal forces causing them to intermix. The handpiece rotates the capsule for a predefined amount of time, speed and direction, specific to the needs of the material being mixed. Ideally, such mixing would take about 10 to 15 seconds.

After mixing the user initiates dispensing (Fig. 2, step 5), by first attaching a dispensing tip (if the capsule is not equipped with a built-in dispensing tip) and then by moving the drive shaft forward by pressing a control button or footswitch. The drive shaft moves forward and causes a second membrane on the dispensing end of the mixing compartment to rupture due to hydraulic forces. The paste is then displaced through the dispensing tip by the forward advancing liquid compartment and plunger (which now move in unison). In embodiments, the user has ultimate control of the application and is able to dispense as much or as little paste as needed by use of the control button or foot switch.

The handpiece uses energy sources typically available on a dental chair resource center such as compressed air, electricity, water, etc. Conceivably, function buttons on the handpiece initiate programmed sequences as follows:
**(1) Load/Unload** - Locks the handpiece compartment door and advances the drive shaft to engage with the hexagonal hole in the capsule plunger (Fig. 2, step 1) and/or retracts the drive shaft and unlocks the handpiece compartment door for removal of a used capsule (Fig. 2, step 6).
**(2) Mix** - Upon Operator demand (Fig. 2, step 2), the capsule is activated by advancing the drive shaft, which displaces the liquid into the powder/mixing compartment (Fig.2 step 3), the drive shaft stops advancing and then starts to rotate rapidly to mix the powder/liquid components (Fig. 2, step 4). A pre-programmed mixing algorithm is initiated which controls mixing speed, direction, and duration specific to the material being mixed. The rotation then stops.
**(3) Apply** - When pressed by the user, advances the drive shaft to move the liquid compartment/plunger forward to dispense the paste and stops dispensing when released (Fig. 2, Step 5).

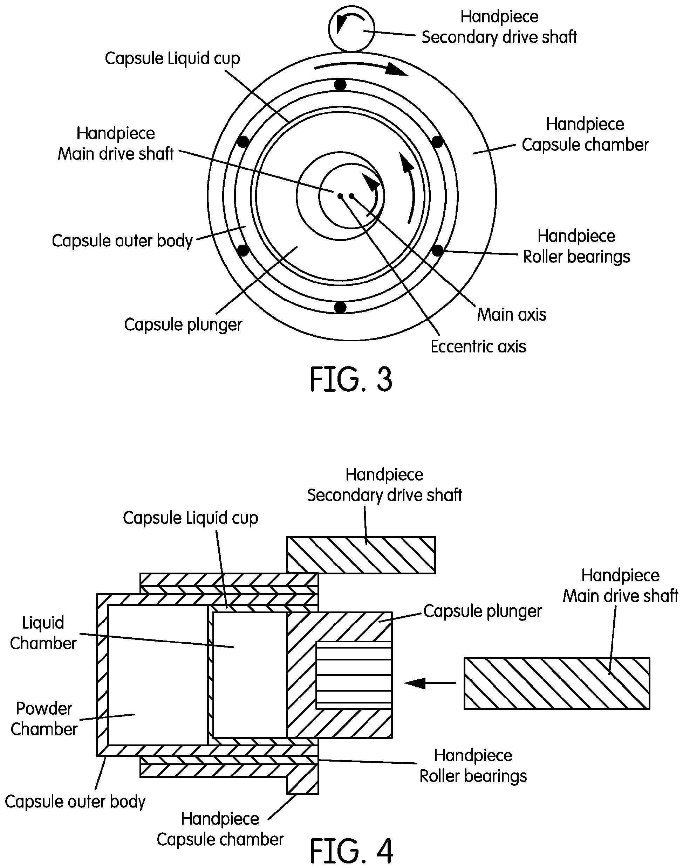

A planetary mixing capsule as depicted in Figs. 3-9 and 11-15 (not claimed) may be used in the delivery system described herein.

The planetary capsule configuration creates a motion that is similar to a planet that orbits the sun where the planet follows an orbit around the sun (central main axis) and rotates on its own axis (the eccentric axis). The direction of rotation for either can be in either direction or both in the same direction depending on the needs of the individual product being mixed, or either one could oscillate back and forth. Thus, a variety of mixing actions may be performed.

The axis of the main drive shaft is in a fixed position axis and the capsule plunger is the follower. The main drive shaft spins the capsule (planet) while the secondary drive shaft spins the handpiece capsule chamber (orbit). In this example the diameter of the orbit is much smaller than the diameter of the planet.

As demonstrated in Fig. 3, the handpiece establishes an orbit by rotating the capsule chamber. Not to be confused with the mixing chamber, the capsule chamber is a compartment within the handpiece which contains the capsule. The capsule chamber has an eccentric cavity. A secondary drive shaft engages the capsule chamber through a gear or other similar interface and rotates the capsule chamber. In this example, the diameter of the orbit is 2 times the distance of the eccentric cavity offset.

The main drive shaft rotates on an axis that is coincident to the main axis. First, the main drive shaft advances to engage an eccentric gear interface on the inner surface of the capsule plunger. Then the main drive shaft advances again (on command) to activate the capsule, displacing the liquid into the powder/mixing chamber. During activation a membrane in the liquid cup (not shown) ruptures due to pressure caused by the advancing plunger.

Mixing then automatically starts as both drive shafts start to rotate. The secondary drive shaft causes the eccentric axis to orbit the main axis and the main drive shaft spins the powder/mixing chamber as it rotates about the orbit. In Figs. 3-9 and elsewhere, the handpiece is not shown for purposes of claritv.

Fig. 4 is a cross section showing the capsule and handpiece mechanisms in the pre-activation stage, before the main drive shaft has advanced to engage the capsule plunger.

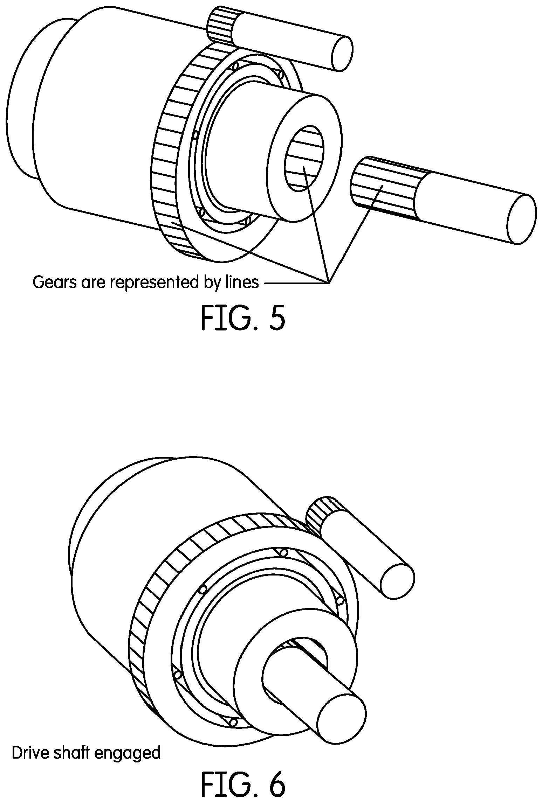

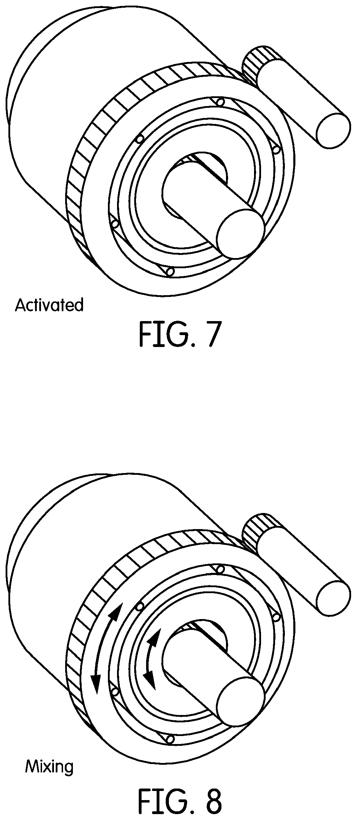

Fig. 5 is an isometric view in the same configuration as shown in Fig. 7 demonstrating that the bearings and capsule chamber could be incorporated into the capsule design or remain as part of the handpiece design as described above.

Fig. 6 shows the main drive shaft after it has advanced into the plunger pocket which contains a mating gear interface.

Fig. 7 shows the assembly after activation, where the main drive shaft has advanced and pushed the plunger forward, rupturing the membrane in the liquid container and displacing the liquid into the powder/mixing chamber. After activation the main drive shaft stops advancing.

Fig. 8 shows both drive shafts rotating to produce the planetary motion. The powder and liquid then combine to form a mixed paste as a result of the mixing motion.

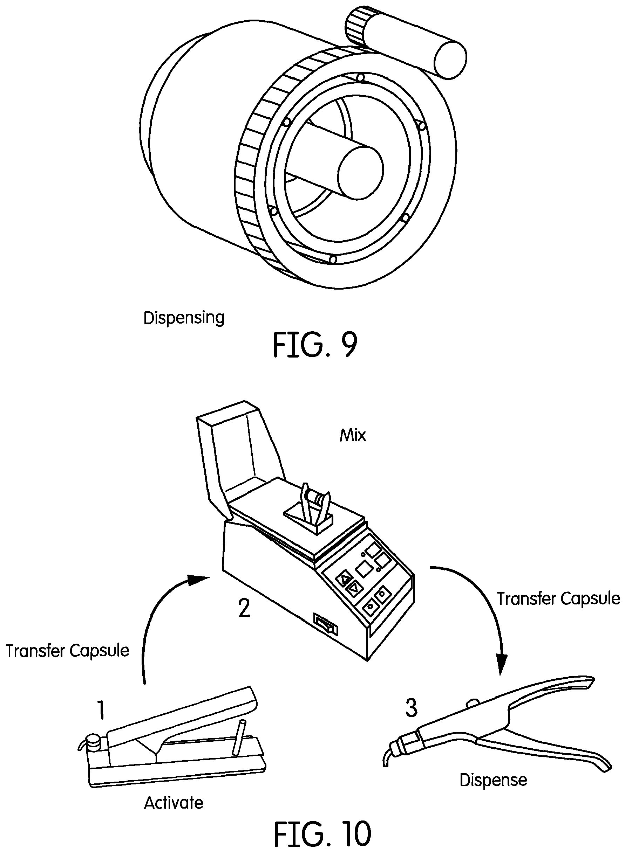

Fig. 9 shows the assembly in the dispensed state (the paste and dispensing tip are not shown). After mixing, the drive shafts stop rotating and once again, on command the main drive shaft advances to dispense the mixed paste. A membrane in the front of the mixing chamber ruptures (in a manner similar to that previously described for the liquid chamber) to release the paste from the mixing chamber and deliver the paste through a dispensing tip (membrane and dispensing tip not shown).

The planetary concept overcomes an inherent problem in the offset capsule concept, which is uniform centrifugal force keeping the paste in the same spot throughout the mixing. The planetary concept overcomes this by rotating the capsule about its own axis while it also rotates about an orbit.

As shown in Fig. 10, the process known in the prior art including activation of the capsule, transferring the capsule to the amalgam mixer, mixing the capsule, removing the capsule from the amalgam mixer and loading the capsule into a human powered dispensing device is laborious and time consuming and sometimes requires the help of a dental assistant. In some cases, the user requires up to three separate pieces of equipment to carry out this procedure. It is therefore the intent of the present invention, to combine these steps into an easy to use handpiece and capsule system that performs each of these functions and eliminates the need to transfer the capsule to individual devices for activation, mixing and dispensing.

One desired feature of the offset capsule concept is that the axis of the mixing compartment is offset from the axis of rotation. When the capsule is rapidly spun about the axis of rotation it will cause the liquid and powder components to mix together by centrifugal forces. In addition, due to the relatively low mass of the handpiece in relation to the capsule, the handpiece will vibrate due to the offset mass of the capsule. This vibration imparts yet another important mixing action to the components. Another desired feature is that the capsule and the handpiece may be part of a dental material application system that can only work together to obtain the benefits of the system as a whole. The handpiece cannot be used with other competitive capsules because they do not have the offset or planetary mixing and they are not configured to fit within the working mechanisms of an alternative handpiece.

Yet another desired feature is that the capsule described herein may work with traditional amalgam mixers and capsule dispensers, but other capsules cannot work in the handpiece disclosed herein (as explained above). This is a unique benefit because in the case of a handpiece failure, the user can use an amalgam mixer as a backup system, since nearly all dental offices have an amalgam mixer. If the user does not want to purchase the handpiece disclosed herein they can use the capsule with their existing equipment and it would work just as well as competitive capsules. Therefore, the applicator system described herein provides a competitive advantage to those who want to use the total system but no disadvantage to those who don't.

Yet another desired feature is the powered dispensing capability. Traditionally, paste from cement capsules have been delivered by hand operated dispensing guns, which usually consists of a handle and lever that acts upon a plunger. These dispensing guns provide the mechanical advantage necessary to press the plunger, but they still depend on the operator to provide the force while simultaneously controlling the paste application. Our new handpiece and capsule, is powered by energy sources within the handpiece (or supplied by the chair-side resource center). The operator simply pushes a control button to advance the drive shaft and dispense the product. This operation requires less sensory control by the operator because the operator does not have to provide, control and monitor the delivery force at the same time. Yet another benefit is that the handpiece described herein may be pen-shaped which is more ergonomic than the manual capsule applicator shown in Fig 10.

Yet another desired feature that is that the system described herein combines the functions of activation, mixing and dispensing into one device. Previously, these functions required the use of separate devices and transfer of the capsule between them to accomplish the same goal. This greatly simplifies the complexity of the restorative procedure for the user and allows the practitioner to concentrate more on the patient and the procedure and less on coordinating the preparation of the restorative materials, resulting in better patient care.

Yet another desired feature of the planetary capsule disclosed herein is that the planetary motion provides a continuous sheering motion because the walls of the mixing chamber are continuously rotating into a new position and the paste wants to stay to the outside due to centrifugal forces.

It is further an objective of the applicator system disclosed herein to use a variety of mixing motions in addition to spinning in only one direction. The handpiece could be programmed to reverse direction and spin in the opposite direction for a back-and-forth rotary motion. By doing so, the components are subjected sheer forces imparted by the inertia of the paste and rapidly changing directions. In the case of the planetary capsule it is possible to use any combination of rotation from the two drive shafts including rotation from only one, both in the same direction, different speeds from either one and reversing one or the other.

The applicator system disclosed herein may include a "smart" package communication system wherein the capsule has an RFID (radio frequency identification) label that can be decoded by a reader contained in the handpiece which identifies the mixing program to be used for that particular product.

The applicator system disclosed herein may include a vacuum within the handpiece and to impart a vacuum to the interior of the capsule with the purpose of reducing porosity in the mixed paste. The vacuum may be powered by the energy available on the chair-side resource center of the dental chair.

The applicator system disclosed herein may incorporate ribs, grooves, or other similar engagement mechanisms in the liquid compartment and/or plunger and/or capsule body to prevent the capsule assembly from slipping due to sudden torque imparted to the capsule by the drive shaft.

The applicator system disclosed herein may include a built-in dispensing tip or an add-on (after market) dispensing tip for direct delivery of the paste to the restoration site.

The applicator system disclosed herein may include internal ribs in the mixing compartment that promote mixing action by sheering the material over the obstruction. Such ribs could be parallel to the axis of rotation, perpendicular or helical.

The applicator system disclosed herein may include frangible membranes on the liquid compartment and mixing compartment that are made of such materials as integrally molded thin wall sections, heat sealed poly/foil laminations, etc. Thin molded plastic membranes with frangible channels for directing the fracture zone in a controlled manner and thicker areas may prevent sections of the frangible membrane from inadvertently becoming dislodged and getting incorporated into the paste. As such, the thickened section acts as a hinge.

In order to signal the completion of steps or the readiness state of the handpiece through the use of audible tones, messages or LED signal lights may be included in the applicator system disclosed herein. For example, after the product is mixed, the material will have a specific working time in which the operator must dispense it. The handpiece could signal the user with lights, audible tones, prerecorded messages etc. that are specific to the material being used and which guide the user through the dispensing and application of the material. For example, a gauge showing working time decreasing, a prerecorded voice prompt that says "ready to dispense", audible tones that beep at different stages, etc.

The applicator system disclosed herein may include a USB computer connection on the handpiece to download specific function updates or to conduct self-diagnostics over the internet or to update the software programs.

The applicator system disclosed herein may include a pre-programmed pressure relief feature that when paste is being delivered and the user wishes to stop dispensing and stops pressing the apply button, the drive shaft automatically backs up a small amount which is sufficient to relieve pressure and prevent paste from oozing out of the dispensing tip.

The applicator system disclosed herein may include a pressure sensing limit capability such as a motor current limit detection which prevents the device from over pressurizing the capsule during activation and dispensing.

The applicator system disclosed herein may include an auto load function where no specific load button is required (as explained above). In this objective, the handpiece would sense when a capsule was loaded and the access door was closed, which would automatically advance the drive shaft to engage with the hexagonal hole in the capsule plunger. As such the plunger and drive mechanism would be prepositioned and ready to be activated on command.

The applicator system disclosed herein may include an automatic unload function, where after the material is dispensed and the drive shaft cannot advance any further it retracts and unlocks the handpiece compartment door automatically, so that the empty capsule may be removed.

The applicator system disclosed herein may be capable of utilizing dispensing tips that when applied (after mixing) pierce the second membrane on the mixing compartment so as to eliminate the need for hydraulic force to do so.

The applicator system disclosed herein may be capable of utilizing a cam on the end face of the handpiece capsule compartment or on the distal end of the capsule and/or both that imparts an axial vibration motion in addition to the rotational motion for increased agitation. As such the drive shaft would have to be spring loaded to induce the mechanism to follow the cam path.

The applicator system according to the invention is capable of utilizing sonic or ultrasonic vibrations such as those generated by piezo electric transducers to facilitate or further enhance the mixing of the components.

Regarding the offset concept, it is also disclosed to utilize a planetary gear to spin the capsule instead of the aforementioned hex drive. The handpiece would have a drive shaft fixed on the axis of rotation with gear teeth that engage with follower gearing on the inside of the cup. This configuration would be beneficial because the cup would not have to be oriented in any specific manner such as with the hex drive coupling mechanism described earlier. Chamfers on the leading edge of the drive shaft gear would engage with similar chamfers on the follower gear and self-orient the capsule as the drive shaft first enters the liquid cup prior during the loading stage.

### PLANETARY MIXING (not claimed)

### Description of Drawings

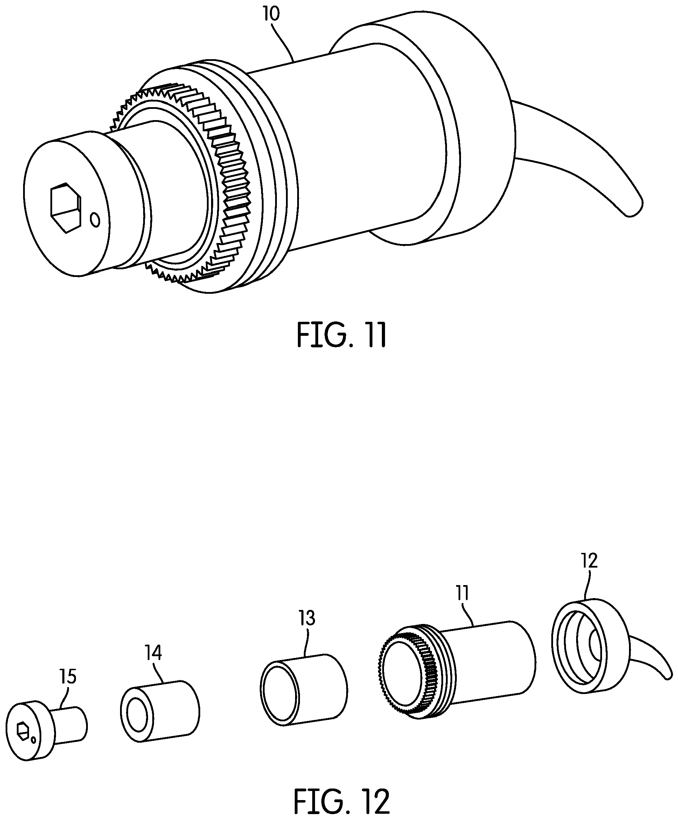

Fig. 11 Illustrates a powder/liquid capsule for producing planetary mixing motion

Fig. 12 Illustrates an exploded view of the capsule of Fig. 11

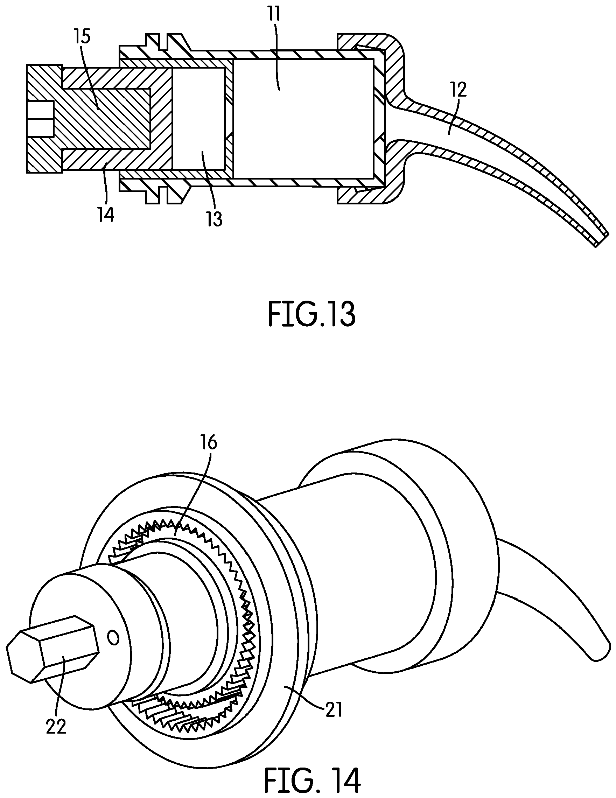

Fig. 13 Illustrates a cross section of the capsule of Fig. 11

Fig. 14 Illustrates the capsule engaged with the hex drive and ring gear of the dispenser

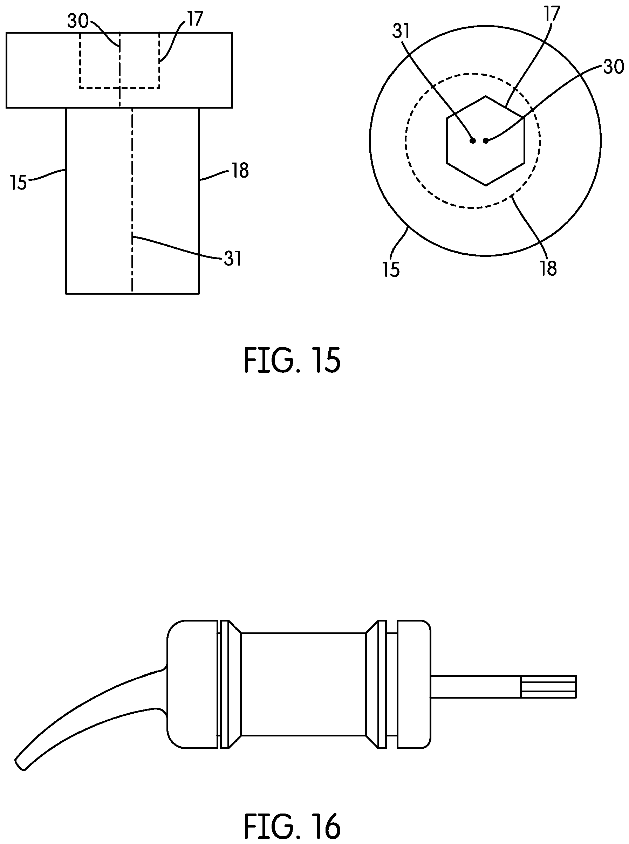

Fig. 15 Illustrates a side view and an end view of the plunger driver and the eccentric axis of the post

### List of Reference Numbers and Nomenclature

10 capsule
11 body
12 nozzle
13 liquid cup
14 plunger
15 plunger driver
16 planet gear
17 hex dive hole
18 plunger driver post
21 ring gear
22 hex drive shaft
30 main axis of rotation
31 offset axis of plunger driver post and capsule body

### Physical Properties, Characteristics, Unique and Innovative Features

In the representation of Figs. 11-15, the dispenser is not described except for the ring gear and hex drive which interface with the capsule. The planetary capsule of Figs. 11-15 is an alternative to the planetary system of Figs. 3-9 described below.

The gearing on the capsule interfaces with gearing on the dispenser to produce the desired planetary motion. Mixing is achieved through centrifugal forces and residual vibrations of the mechanism during operation. The ring gear of the dispenser remains stationary. The planet gear of the capsule body is a spur gear which meshes with the ring gear of the dispenser.

The capsule consists of a body, nozzle, liquid cup, plunger and plunger driver. The powder is contained in a distal section of the body referred to as the mixing compartment. A frangible membrane separates the mixing compartment from the nozzle. The liquid cup seals the proximal end of the capsule thereby containing the powder in the mixing compartment. The liquid is contained in the liquid cup which has a frangible membrane on the distal end. The proximal end of the liquid cup is sealed by a frictional fit plunger. The proximal end of the plunger has a cylindrical hole that mates with a post on the distal end of the plunger driver. The driver post fits loosely within the cylindrical hole of the plunger so that it can rotate freely. The proximal end of the plunger driver has a flange with a hex-shaped hole configured to mate with a hex-shaped shaft of the dispenser. The axis of the hex shaped hole and the axis of the plunger driver post are offset and parallel. The axis of the hex-shaped hole is coincident with the main axis of rotation and the ring gear of the dispenser. The axis of the driver post is coincident with the axis of the capsule body, liquid cup and plunger.

The hex shaft of the dispenser engages with the hex-shaped hole of the plunger driver. The offset axis of the plunger driver causes the planet gear of the capsule body to engage with the ring gear of the dispenser. When the hex shaft turns it causes the plunger driver post to orbit around the main axis thereby causing the planet gear to orbit around the ring gear. The resulting motion causes the capsule body to simultaneously orbit around the ring gear and turn on its own axis.

The teeth of the gears are arranged so that they mesh together and rotate freely without interference. The planet gear has fewer teeth than the ring gear. For example, the ratio of planet gear teeth to ring gear teeth is, 55:60. When the hex drive rotates clockwise it results in the body rotating counterclockwise with respect to the gear ratio.

The capsule is activated by advancing the hex drive shaft of the dispenser, so that it pushes the plunger forward into the liquid cup. Hydraulic pressure ruptures the membrane of the liquid cup and releases the liquid into the mixing compartment. After activation, hex drive shaft stops advancing so that the mixing step can occur. The hex drive starts to rotate which drives capsule around the ring gear as explained above.

The rotation is preferably very fast and causes the powder and liquid components to mix. Centrifugal forces cause the powder and liquid to be dispersed against the inner wall of the mixing compartment. The eccentric rotation causes the inner side wall of the capsule body to rotate and the paste to continuously flow over the side wall to the outer most orientation. In this manner, the paste is continuously sheering over itself and mixing.

### MIXING BLADES (not claimed)

### Physical Properties, Characteristics, Unique and Innovative Features

Fig. 16 Illustrates a side view of the capsule in the filled/ready to activate stage.

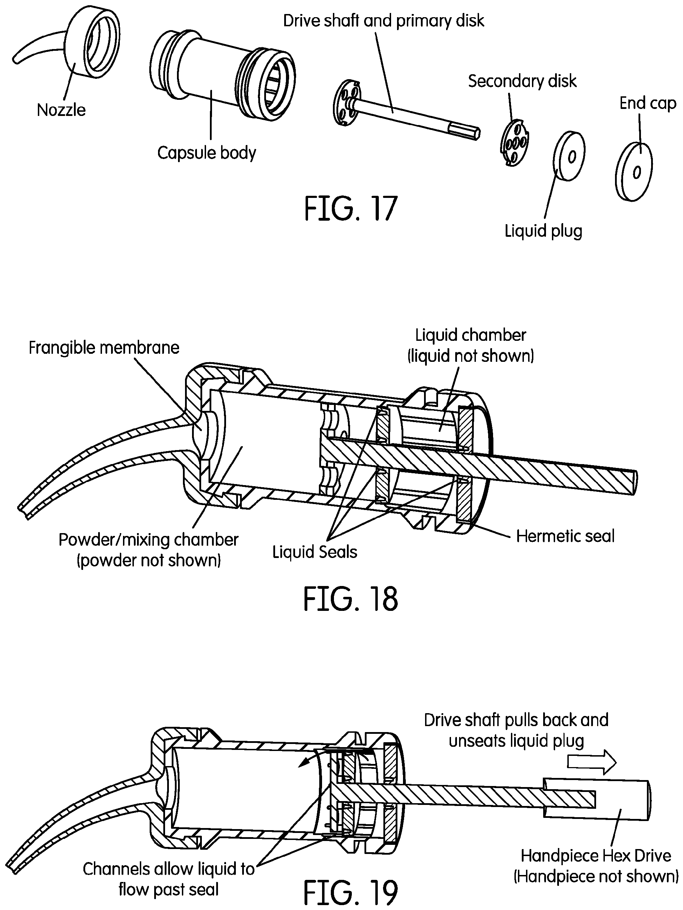

Fig. 17 shows an exploded view of the capsule components

Fig. 18 is an isometric cross section view of the capsule in the filled/ready to activate stage. The capsule is filled with the powder and liquid components of a dental restorative material (powder and liquid not shown)

Fig. 19 shows a cross section of the capsule as it would be loaded into a handpiece with the hex drive engaging the drive shaft and pulling back to activate the capsule. The fluid in the liquid compartment flows through the channels to the powder storage/mixing compartment

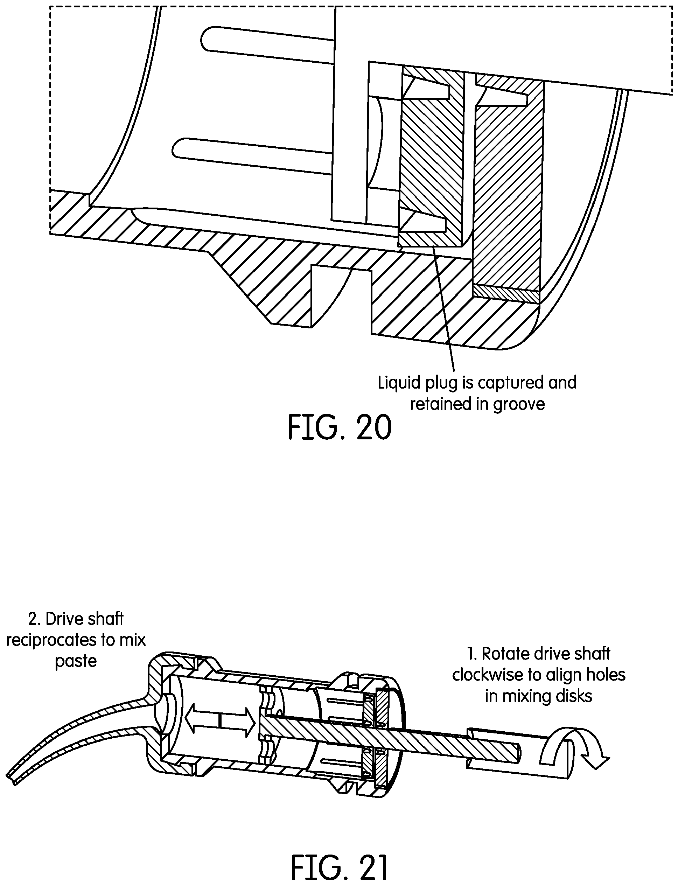

Fig. 20 is a close up section view of the drive shaft after it has fully retracted and displaced the liquid seal into the retaining groove.

Fig. 21 is an Illustration of mixing an activated capsule, where the hex drive is rotated clockwise to align the holes in the primary and secondary disks and the drive shaft reciprocates in the mixing chamber to mix the paste.

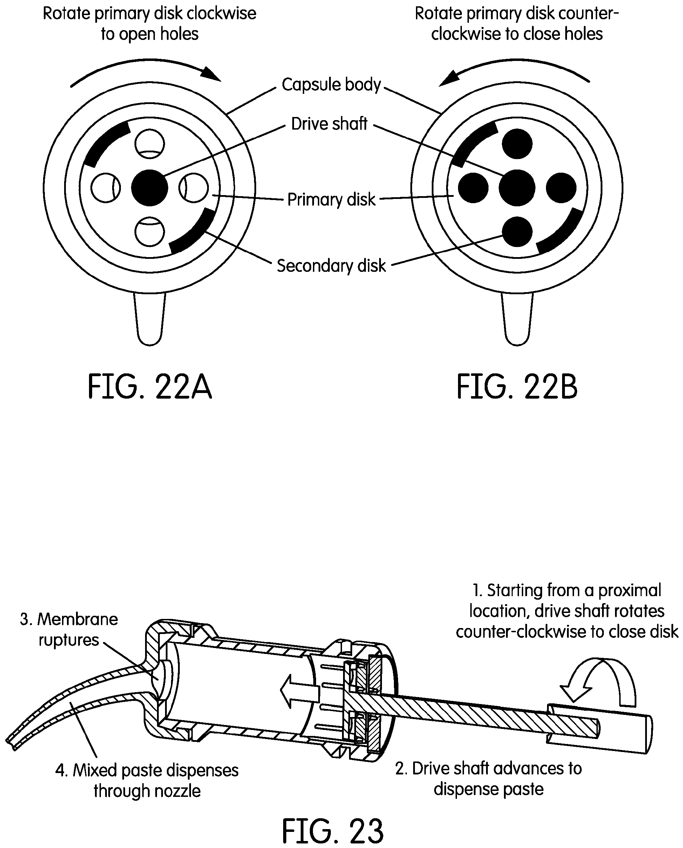

Fig. 22a is an end view cross section illustrating how the holes are aligned by rotating the primary disk clockwise.

Fig. 22b is an end view cross section illustrating how the holes are closed (misaligned) by rotating the primary disk counter-clockwise.

Fig. 23 shows the cartridge preparing to extrude the mixed paste. The drive shaft is positioned at the proximal end and rotated counter-clockwise to close the holes. The drive shaft then advances the disks which can now act as a piston to displace the mixed paste.

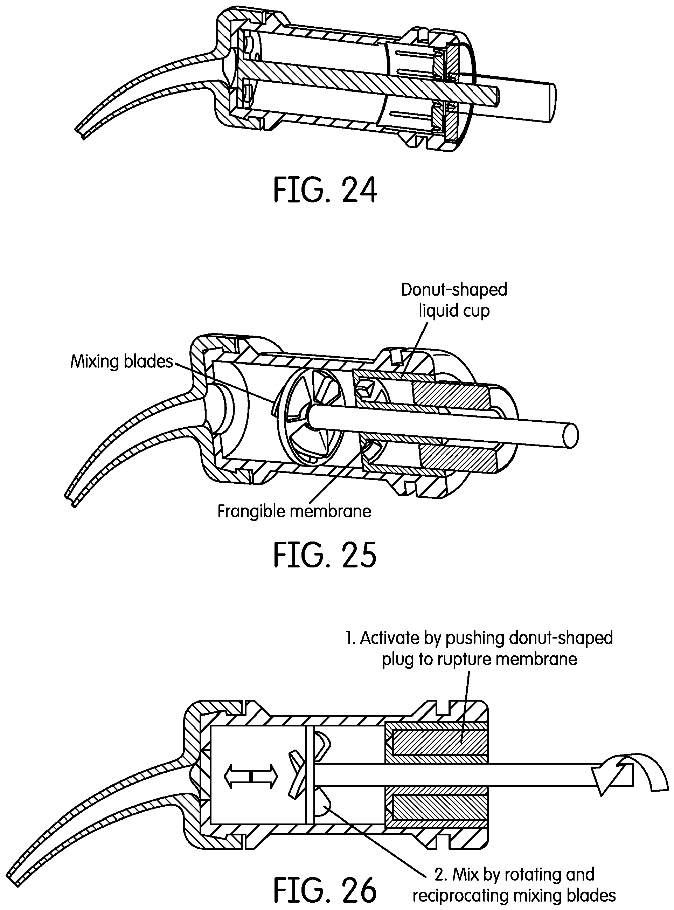

Fig. 24 shows a cross section of a fully extruded capsule

Fig. 25 shows two alternatives that could be used together or independently - donut-shaped liquid cup and flexible folding mixing blades.

Fig. 26 illustrates the donut-shaped liquid cup in the activated stage, having the membrane ruptured and the mixing blades reciprocating to mix the paste

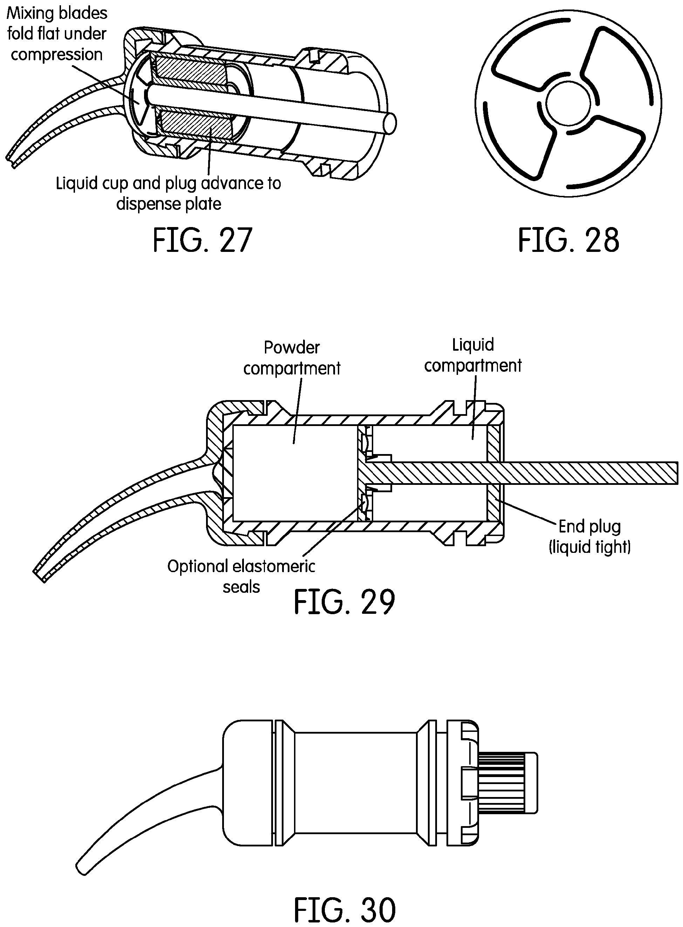

Fig. 27 shows an empty capsule with the paste fully dispensed. The paste is dispensed by advancing the liquid cup and plug in unison. The flexible mixing blades fold flat under compression.

Fig. 28 shows an end view of the collapsed blades. There is a small space around each blade to allow paste to squeeze through as the whole assembly collapses.

Fig. 29 illustrates an alternative, wherein the primary and secondary disks effectively seal the liquid and powder in their respective compartments until activated.

Referring to Figs. 17 through 24, the components of the capsule are described in more detail below.

The powder component of the formulation is stored in the distal end of the capsule. A pair of perforated mixing disks are enclosed in the powder storage compartment. The first is a primary disk which is securely attached to a drive shaft for means of rotation. The other is a secondary disk which is loosely attached to the drive shaft. The secondary disk preferably has a slight friction fit with the inside wall of the mixing chamber so that when the primary disk rotates the secondary disk tends to resist rotation and therefore affecting position of one disk with respect to the other.

The secondary disk has a groove along the outer edge that mates with a stop block which is affixed to the primary disk. The groove and stop block are configured so that when the primary disk is rotated the holes align or misalign as needed. Alignment is used for mixing and is achieved with a clockwise rotation of the primary disk. Misalignment is caused by turning the drive shaft counter-clockwise and is used to close the holes and is used for extruding the paste like a piston.

A liquid sealing disk forms a liquid tight seal between the powder storage compartment and the liquid storage compartment. The outer most surface of the liquid sealing disk produces a liquid tight seal with the inside diameter of the capsule body and is positioned against a small ledge to prevent forward motion into the powder storage compartment. The liquid sealing disk also has a hole in the middle with a liquid tight seal through which the drive shaft extends towards the proximal end of the capsule.

The liquid storage area is completed by an end cap which is hermetically sealed to the proximal end of the capsule body. The end cap has a hole in the center for the drive shaft with a liquid tight seal.

The inner wall of the liquid storage area has at least one groove along the outside wall of the liquid chamber, which runs parallel to the main axis of the capsule body and is positioned a slight distance proximal from the liquid seal seating ledge. The capsule is activated by pulling back on the drive shaft and dislodging the liquid sealing disk. When the liquid sealing disk passes the distal starting point of the groove the liquid is displaced into the powder storage chamber. When the drive shaft is pulled all the way back, the sealing flange of the liquid sealing disk springs outwardly and is captured in a retaining groove near the proximal end of the capsule body, preventing any further axial movement of the sealing disk.

The drive shaft is then turned clockwise to open the holes. Simultaneously, the drive shaft reciprocates from a proximal location to a distal location as many times as necessary to mix the paste. The powder/liquid mixture passes through the holes in the rotating disks and mixes into a paste. Speed of rotation, number of reciprocation cycles and duration of mixing are variable and could be adjusted to the needs of specific paste formulations.

When the paste has been thoroughly mixed, the drive shaft is pulled back all the way to the proximal location and rotated counter-clockwise to close the holes. The drive shaft is then moved forward using the closed disks as a piston to dispense the paste through the nozzle.

### Additional Systems (not claimed)

One system uses the primary and secondary disks to separate the liquid and powder compartments as shown in Fig. 29. The disks would create a liquid tight seal between each other when the mixing holes are in the closed position. Liquid tight seals would also be formed between the secondary disk and drive shaft and the secondary disk and the inside wall of the capsule body. Elastomeric seals could be utilized to form an effective liquid tight seal at each hole in the closed position. Alternatively, an elastomeric disk could be utilized between the primary and secondary disks to form the required liquid tight seals. An additional system consists of a donut-shaped liquid cup as shown in Fig. 25. The cup would consist of a soft plastic such as low density polyethylene (LDPE) or polypropylene (PP) so that it could form a plug seal with the inner surface of the capsule body. It would have a frangible seal either formed as a contiguous thin section or a heat sealed foil member at the distal end.

Another system consists of a mixing blade that is much like a propeller with two or more blades. The blades are supported at the end of a shaft which provides the rotational and reciprocating motion. The outer edge of the blades may be supported by an outer ring that is attached to a radial member that further connects to the shaft. The blades could fold out of the way during dispensing due to the flexible nature of the plastic used in their manufacture.

### Physical Properties, Characteristics, Unique and Innovative Features

Figs. 30 to 41 show a capsule with blades that are aligned with the axis of the capsule and rotate around the outside wall of the capsule (as opposed to the previous examples where the blades were in a plane perpendicular to the axis).

Fig. 30 Illustrates a side view of the capsule in the filled/ready to activate stage.

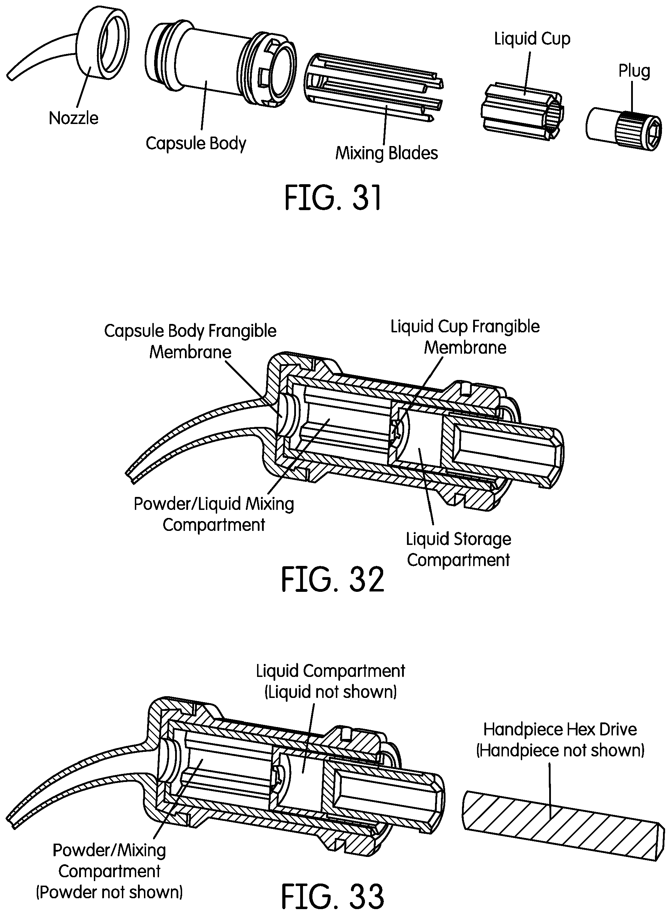

Fig. 31 shows an exploded view of the capsule components

Fig. 32 is an isometric cross section view of the capsule in the filled/ready to activate stage. The capsule is filled with the powder and liquid components of a dental restorative material (powder and liquid not shown)

Fig. 33 shows a cross section of the capsule as it would be loaded into a handpiece with the hex drive positioned ready to engage the capsule plug.

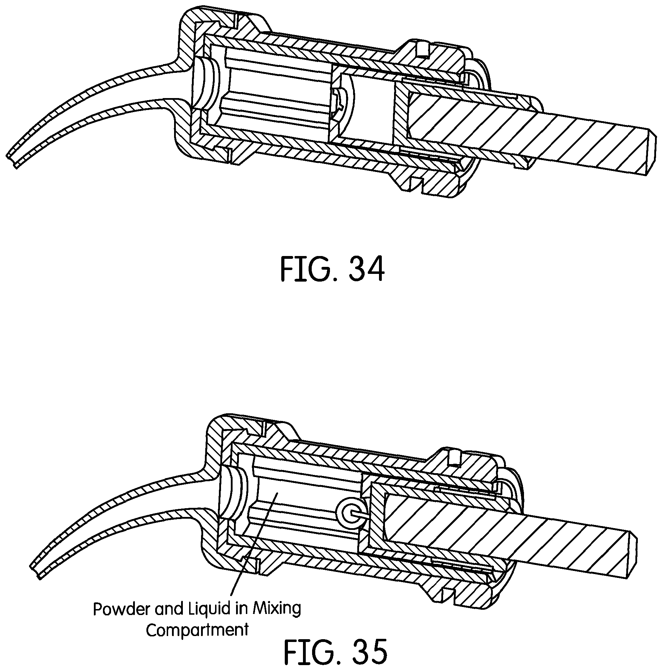

Fig.34 illustrates the capsule after the hex drive has advanced forward and engaged the hex-shaped hole in the plug.

Fig. 35 is an Illustration of an activated capsule, where the hex drive has advanced pushing the plug into the liquid cup, rupturing the cup membrane and displacing the liquid into the powder/mixing compartment.

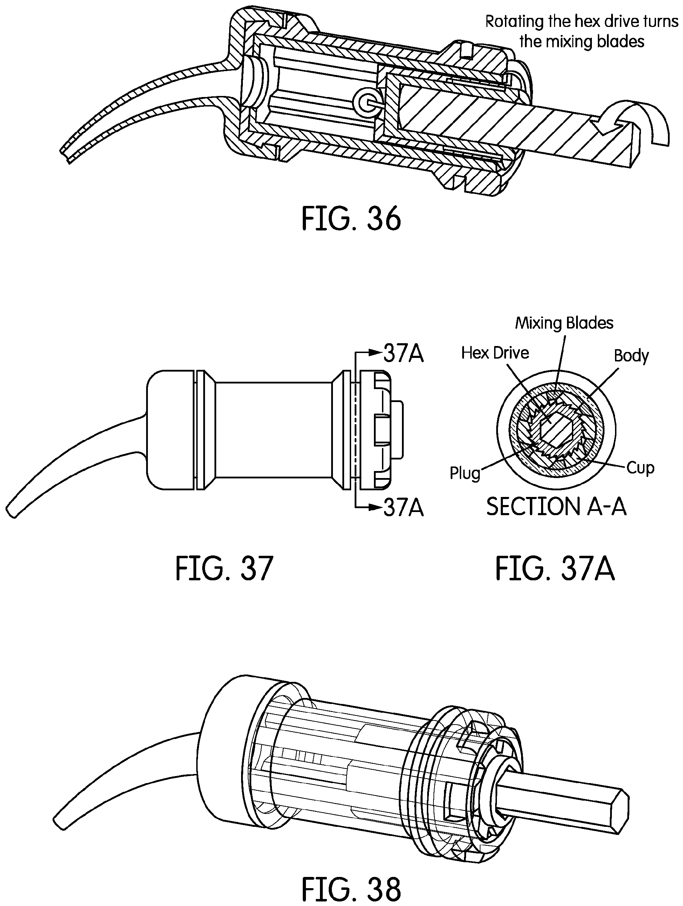

Fig. 36 shows the hex drive rotating to mix the powder and liquid components

Fig. 37 illustrates a cross section of the capsule as in Fig. 36 and identifies the components that mesh together to transfer the rotational force to the mixing blades

Fig. 38 is a capsule as in Fig. 36 with the capsule body shown transparently

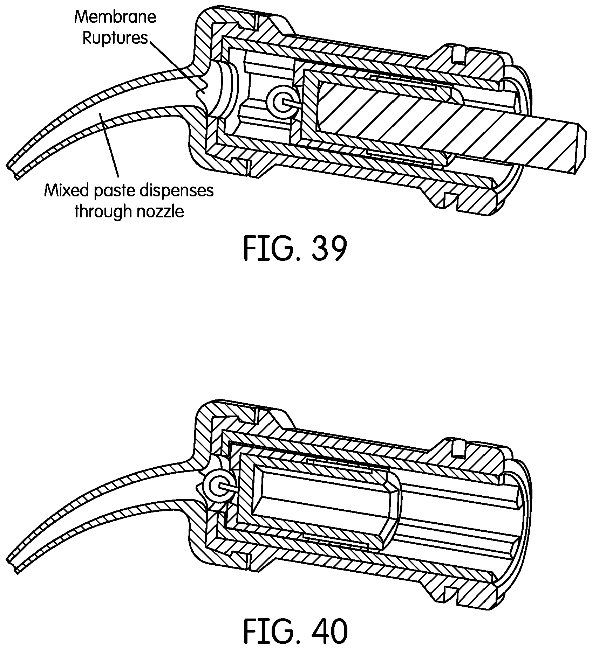

Fig. 39 illustrates the capsule dispensing the mixed paste as the hex drive advances, rupturing the body membrane

Fig. 40 shows an empty capsule with the hex drive withdrawn.

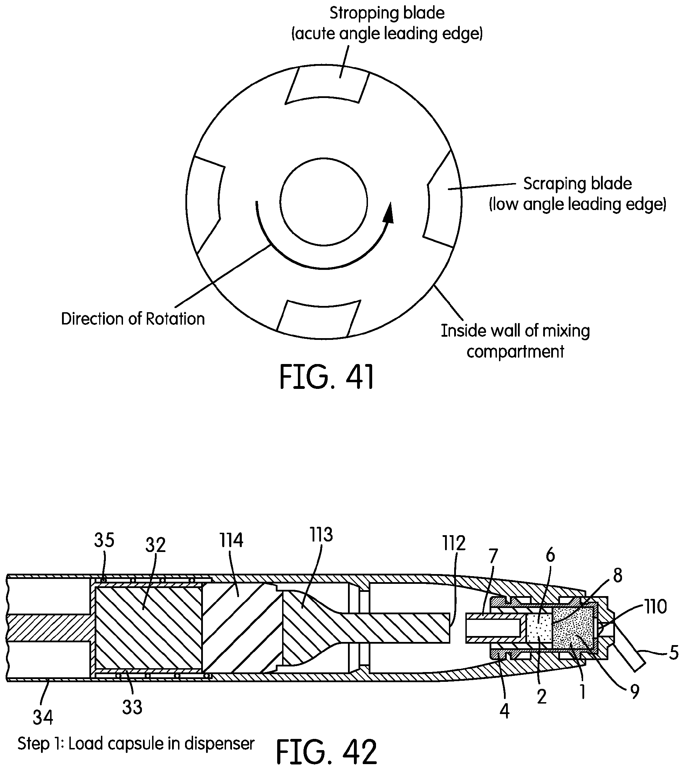

Fig. 41 shows a cross-section of the blades showing various leading edge configurations for mixing the paste during rotation

Referring to Fig. 32 the components of the capsule are described in more detail below.

The body is the main component, which houses the other components and defines the outer geometry which would interface with the handpiece. It has a thin frangible membrane at the distal end that is either contiguously formed with the body or is a separate heat sealed foil laminate. The membrane isolates the powder from the powder/mixing compartment and prevents it from getting into the nozzle.

The mixing blades consists of a round disc at the distal end that supports radially spaced blades. The disc has a hole in the middle to allow the mixed paste to pass through to the nozzle. The blades are trapezoidal-shaped with a low angle blade on one side that scrapes the side of the mixing chamber and a high angle surface on the other side that pushed by the grooves on the outer surface of the liquid mixing cup.

The liquid cup has radially spaced grooves on the outer surface that conform to the profile of the mixing blades. When the cup rotates it transfers the rotation to the mixing blades because the blades are captured between the grooves and the inner wall of the capsule body. When the cup is pushed forward during dispensing the mixing blades slide through the grooves to allow the cup to act as a piston to dispense the mixed paste. The cup also has an inner frangible membrane that is either contiguously formed with the cup or a separate foil laminate. The inner distal end of the cup is cylindrical and contains the liquid component of the dental material. The cylindrical shape is sealed by the distal end of the plug. The inner proximal surface of the cup has radially spaced ratchet teeth that mesh with similarly shaped teeth on the proximal end of the plug. These ratchet teeth transfer the rotation of the plug to the cup.

The plug has a distal end that is smooth and circular to seal the liquid in the distal end of the cup. The proximal end of the plug has ratchet teeth that mesh with similarly shaped ratchet teeth on the proximal end of the cup. The plug also has a hex-shaped hole in the center that is used to engage a hex-shaped drive shaft from the handpiece.

The nozzle snaps onto the capsule body and transfers the paste from the powder/liquid mixing compartment to the restoration site.

The handpiece itself is not shown, but the drive shaft of the handpiece is shown to illustrate the combination of forward and rotational motion necessary to activate, mix and dispense the material. The handpiece would hold the capsule in a stable position to enable the drive shaft to interact with the capsule.

Another embodiment is where the mixing blades have an acute angle to the direction of rotation so that they strop the paste. The blades could alternate between the scraper blade (low angle) and the stopping blade (acute angle) as shown in Fig. 41. The stopping action with an acute angle is much like the hand mixing action that a practitioner would use when hand mixing pastes with a spatula. One blade would scrape the paste off of the wall and the next would strop it against the wall, resulting in a very efficient mixing action.

Another embodiment has internal mixing elements that are spread open during mixing, but collapses during dispensing so that the plunger can displace all the paste. The elements could collapse in a plane perpendicular to the axis of rotation or fold up against the outer walls of the mixing chamber. The elements could also break away from a drive shaft to facilitate collapsing. See US Class 416 - Fluid Reaction Surfaces, subclass 142 - working members foldable pivotable or collapsible to non-use position.

Another embodiment has helical mixing blades that mesh with helical grooves in the cup. Helical blades would add a directional force to the paste and force the paste to one end of the mixing chamber so that it would not accumulate in the center

Another embodiment of the mixing blades is a disc that rotates and which reciprocates between a distal position and a proximal position. The disk could be perpendicular to the main axis of the mixing chamber or angled to impart more mixing action. The disc could have holes and/or angled flaps in it to allow paste to pass through as it mixes. The disc could then facilitate displacing the paste into the dispensing nozzle like a piston and the flaps could simply collapse against the distal wall of the mixing chamber when acted upon by the cup as a piston.

Fig.s 42-45 illustrate a ultrasonic hand piece

Fig. 42 illustrates the dispenser system prior to capsule activation

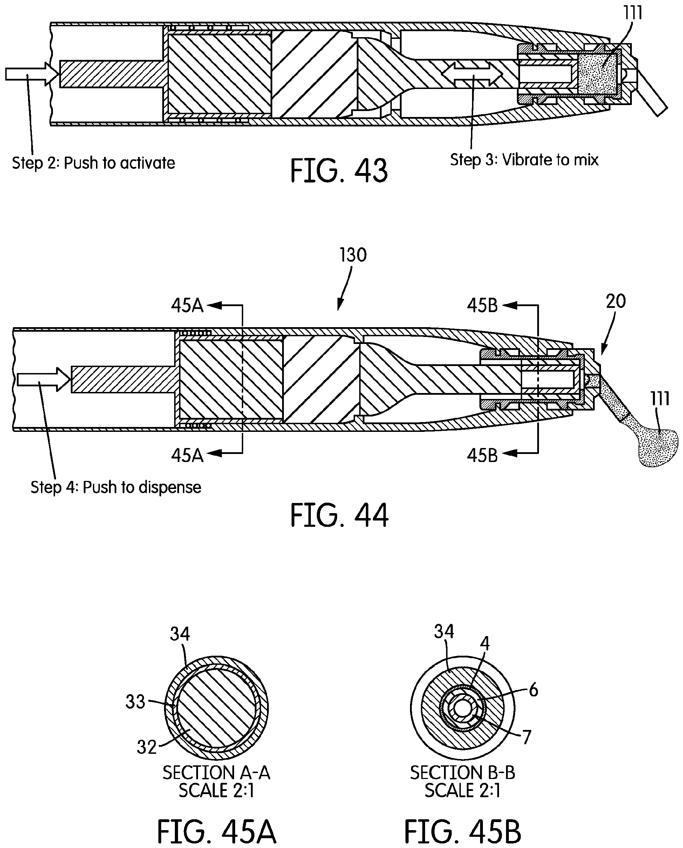

Fig. 43 illustrates the dispenser system after capsule activation (stage 1 displacement)

Fig. 44 illustrates the dispenser system after paste dispensing (stage 2 displacement)

Fig. 45 illustrates cross sectional views of Fig. 44

### List of Reference Numbers and Nomenclature

1 Powder
2 Liquid
4 Body (capsule)
5 Nozzle
6 Liquid receptacle
7 Plunger
8 First membrane of liquid receptacle
9 Mixing chamber
110 Second membrane of capsule body
111 Mixed dental restorative material (paste)
112 End (sonotrode)
113 Sonotrode
114 Vibration source
20 Capsule
130 Delivery device
32 Counterweight
33 Sliding sleeve
34 Outer body of delivery device
35 Spring

Described below is an ultrasonic vibration mixing as shown in Figs. 42 to 45. The delivery device 130 and capsule 20 combine together to form a packaging and delivery system that eliminates the need to use a stand-alone amalgamator (a.k.a. triterator) and therefore there is no need to transfer the capsule from an activator, then to an amalgamator and then finally to a manual dispenser. In this new system, the capsule 20 is loaded into the delivery device 130, which activates, mixes and dispenses all from the same delivery device 130.

It should be noted that only the delivery end of delivery device 130 is shown and described herein, because any number of mechanisms can be utilized to provide the displacement of vibration source 114 and sonotrode 113. Such mechanisms include, but are not limited to, a plunger mechanically advanced by a lever, a pneumatic cylinder, a lead screw and nut, a piezoelectric linear motor, rack and pinion or other such mechanisms that provide linear displacement.

Capsule 20 consists of a body 4, a nozzle 5, a liquid receptacle 6 and a plunger 7. The liquid receptacle 6 has a first membrane 8 positioned between liquid receptacle 6 and mixing chamber 9. Capsule body 4 has a second membrane 110 positioned between mixing chamber 9 and nozzle 5. The powder 1 and liquid 2 are constituents of a mixed dental restorative material 111 and are contained and isolated in a capsule 20. The liquid 2 is contained in liquid receptacle 6 and sealed by plunger 7 on the proximal end and the first membrane on the distal end. The powder 1 is contained in the mixing chamber 9 and is sealed by liquid receptacle 6 and second membrane 110. Capsule 20 is preferably detachable from delivery device 130.

To activate capsule 20, plunger 7 is displaced in an axial direction towards the distal end of capsule 20 by end 112 of sonotrode 113. This first stage displacement, causes first membrane 8 of liquid receptacle 6 to rupture under hydraulic force, which in turn displaces liquid 2 into mixing chamber 9. After the liquid 2 is transferred into mixing chamber 9, the axial displacement is paused for mixing. Vibrations from vibration source 114 are preferably transferred to plunger 7 and capsule body 4 of capsule 20 to induce mixing of powder 1 and liquid 2 into a paste of mixed dental restorative material 111. The duration and intensity of the vibrations are variable depending on the ratio of powder 1 to liquid 2, the given amounts of material, the desired paste consistency and specific formulation requirements, etc.

The vibration source 114 comprises multiple piezoelectric elements, which are connected at one end to the sonotrode 113 and at the other end to a counterweight 32. The counterweight 32 is surrounded by a sliding sleeve 33. The delivery device 30 comprises the sonotrode 113, vibration source 114, counterweight 32 and sliding sleeve 33, which are all arranged displaceably within outer body 34 of delivery device 130. This displaceable arrangement is referred to as the inner displaceable assembly and is acted upon by an axial force provided by a piston, plunger, linkage, lever or pneumatic cylinder, etc. to displace the end 112 of sonotrode 113 in relation to capsule 20. The displacement acts in a direction from the proximal end to the distal end of delivery device 30 and capsule 20.

After the dental restorative material 111 is thoroughly mixed into a paste, the end 112 of sonotrode 113 is displaced towards the distal end of capsule 20, which displaces plunger 7 and liquid receptacle 6 towards the distal end of capsule 20. This second stage displacement causes the second membrane 110 to rupture under hydraulic force, which permits the mixed dental restorative material 111 to be transferred into nozzle 5 for delivery to the operative site. Preferably, the second stage displacement can be controlled by the operator in order to control the flow of the paste according to the operator's needs.

Spring 35 biases the inner displaceable assembly towards the proximal end of delivery device 130 so that capsule 20 can be loaded into delivery device 130. During axial displacement of the inner displaceable assembly, spring 35 is compressed. When dispensing is complete the biasing force of spring 35 returns the inner displaceable assembly back to the proximal end of delivery device 30 so that empty capsule 20 may be removed and discarded.

in another embodiment, the sonotrode transfers vibrations directly to the body of the capsule through a direct and secure connection. The connection can be selectively locked and unlocked to disconnect the capsule body from the sonotrode and to facilitate each stage of displacement of the sonotrode during capsule activation and delivery of mixed dental restorative paste.

Another embodiment exists wherein the device mixes two fluid or paste products.

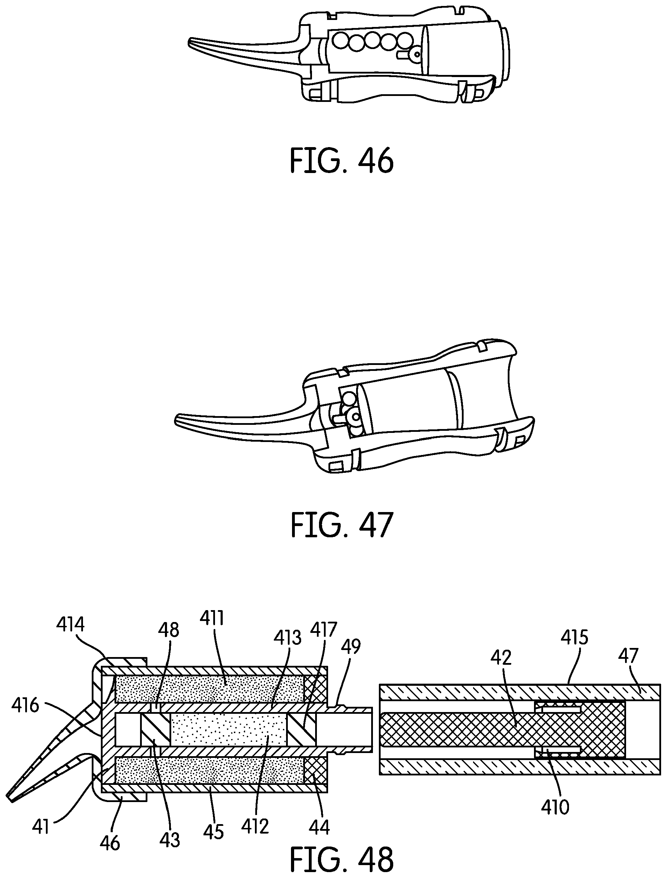

Described below is mixing with loose magnetic mixing elements and an external magnetic field. After the capsule is activated (the liquid is introduced into the powder) a magnetic field is introduced to move the balls around and assist in mixing the paste. Fig. 46 illustrates a how the balls are attracted to an external magnet. The magnetic field can be moved around the capsule or pulsed on and off. In addition, the capsule can be rotated about its longitudinal axis to induce further mixing action. The combination of capsule rotation and application of magnetic field combine to mix the product more so than just rotation alone.

After mixing, the magnetic field is removed and the product is dispensed by pushing on the plunger. As the plunger advances, the round balls easily move to the front of the capsule where they eventually accumulate as shown in Fig. 47. The paste can easily pass between the balls, even if they are tightly packed together.

The front portion of the capsule is designed to act like a screen. It permits the paste to pass through, but prevents the balls. The capsule and balls are designed such that the passageway(s) cannot become blocked.

When used in conjunction with the handpiece described in the original disclosure, the capsule has a unique competitive advantage over other systems. One advantage is that it could also be used in an amalgam mixer, because the balls would not interfere with trituration. Likewise, competitive capsules would not work our new handpiece without the internal magnetic mixers.

The capsule described below is suitable for use within the applicator system described herein for mixing powder/liquid dental compositions in conjunction with a dispenser that activates the capsule, mixes and applies the resulting paste.

The following section describes a method and design for storing the liquid in a central cavity of the mixing shaft.

Fig. 48 identifies the components of the system.

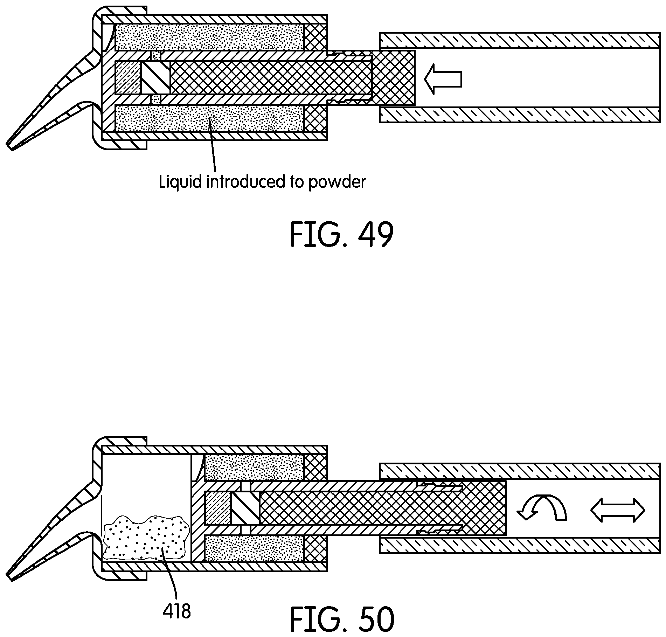

Fig. 49 illustrates a capsule activated by the handpiece plunger.

Fig. 50 illustrates the mixing stage.

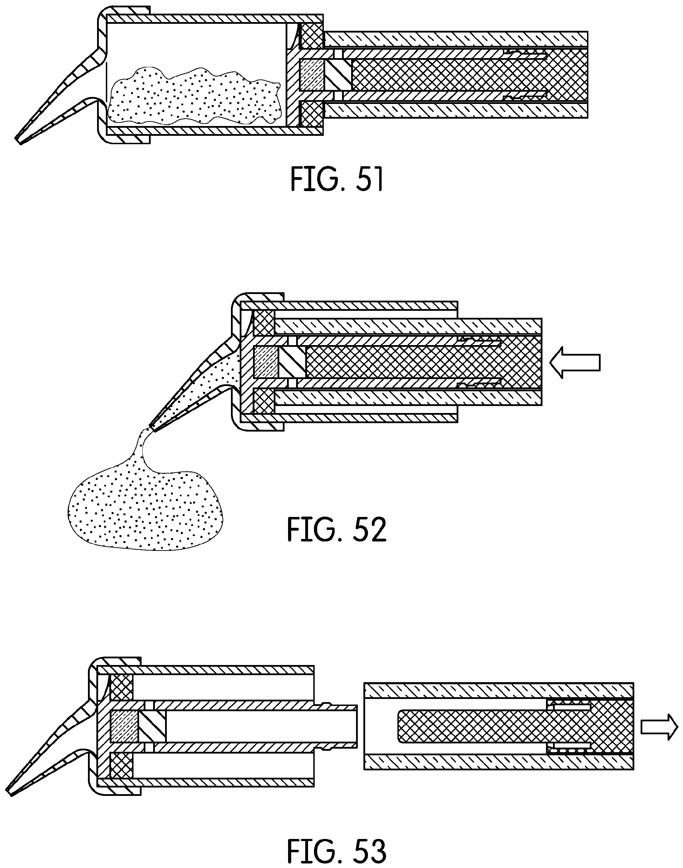

Fig. 51 illustrates when mixing has been completed.

Fig. 52 illustrates a fully extruded capsule.

Fig. 53 illustrates an empty caspsule with handpiece plunger withdrawn.

### List of Reference Numbers and Nomenclature

41 Mixing disk
42 Handpiece elongated plunger
43 Second displaceable piston
44 Donut-shaped plunger
45 Capsule body
46 Nozzle
47 Extrusion tube
48 Vent hole
49 Bayonet locking tab
410 Bayonet coupling thread
411 Powder component
412 Liquid component
413 Hollow shaft
414 Capsule
415 Handpiece driveshaft
416 Frangible membrane
417 First displaceable piston
418 Mixed dental composition

Described herein is a capsule 414 and a handpiece (for clarity, only the handpiece driveshaft 415 of the handpiece is shown). The capsule is for storing and mixing powder 411 and liquid 412 components of a dental composition 418. For example, the composition is a glass ionomer tooth restorative material. The handpiece acts upon the capsule to activate, mix and dispense the mixed dental composition.

The capsule described herein is configured to keep the powder and liquid components separate until needed for application. The powder is stored in a compartment formed by the capsule body 45. The liquid is stored inside a hollow shaft 413 within the capsule body. The liquid is expelled from the hollow shaft during an activation stage and wets the powder in the mixing chamber. The hollow shaft is connected to a mixing disk 41 that rotates and reciprocates to mix the powder and liquid into a paste-like dental composition. The dental composition is dispensed from the capsule by extruding the paste through a nozzle 46 at the distal end of the capsule.

The liquid storage compartment in the hollow shaft has a solid end face at the distal end and an open end at the proximal end. The side wall of the hollow shaft has a vent hole 48 near the distal end of the shaft. A first displaceable piston 417 is positioned over the vent hole and seals the end of the hollow shaft. The liquid component is filled in through the open end of the hollow shaft and sealed with a second displaceable stopper in the proximal end of the hollow shaft. The liquid is therefore contained in the central compartment between the first and second displaceable pistons.

The capsule has an internal mixing disk that rotates and reciprocates to mix the dental composition. The mixing disk is connected to the distal end of the hollow shaft. The axis of the hollow shaft is coincident with the axis of the capsule body. The proximal end of the hollow shaft also has a means for coupling to the driveshaft of the handpiece. The handpiece driveshaft provides the motion to activate the capsule and rotate and reciprocate the mixing disk.

The mixing disk of the hollow shaft is positioned adjacent to the distal end wall of the capsule's mixing chamber. The powder is preferably placed in the mixing chamber surrounding the liquid filled hollow shaft. The proximal end of the capsule is sealed with a donut-shaped plunger 44, which also acts as a bearing for the hollow shaft. The bearing of the donut-shaped plunger fits frictionally with the outer surface of the hollow shaft, so that the hollow shaft can rotate and reciprocate while maintaining a seal to contain the powder and mixed dental composition. The donut-shaped plunger also fits frictionally against the inner side wall of the capsule body so that it can be displaced towards the distal end of the capsule to dispense the mixed dental composition.

The handpiece driveshaft has an elongated plunger that fits within the hollow shaft. During activation, the elongated plunger advances and contacts the second displaceable piston. The displacement causes the first displaceable piston to move towards the distal end by virtue of hydraulic force. When the proximal edge of the first displaceable stopper passes the vent hole the liquid flows out the vent hole and into the mixing chamber with the powder. All the liquid has then been displaced into the mixing chamber when the elongated plunger of the driveshaft has displaced the second displaceable piston all the way to the end of the hollow shaft.

The driveshaft has a bayonet coupling thread 410 on the proximal end of the elongated plunger. The proximal end of the hollow shaft has a bayonet locking tab 49. During activation, as the driveshaft approaches the end of the hollow shaft the drive shaft starts to rotate in a direction that will engage the bayonet locking features. Once coupled, the drive shaft starts continues to rotate and then starts to reciprocate back and forth mixing the powder and liquid into a paste like consistency. The direction and continuous rotation ensures the coupling engagement of the bayonet locking features remained locked as the mixing elements reciprocate.

When the desired consistency is reached, the extrusion tube 47 advances to push on the donut-shaped plunger, expressing the mixed dental composition. The driveshaft also advances the mixing disk and hollow shaft as necessary to advance in unison with the donut-shaped plunger. Spaces between the blades of the mixing disk permit the paste to flow around the mixing blades and out the nozzle.

Collapsible mixing blades that fold flat as the paste is extruded can also be utilized as described in a previous disclosure.

Another embodiment distributes the liquid along the length of the mixing compartment to distribute the liquid more evenly throughout the powder component.

Another embodiment of this concept has a hollow shaft with a hole that goes through the mixing disk and a bypass liquid vent on the inner end section of the hollow shaft. The liquid would then be transferred to distal end of the mixing disk rather than the side of the hollow shaft.

## Claims

1. A handpiece, comprising:
(i) a chamber having a powder and liquid,
(ii) the handpiece capable of activating the chamber such that the powder and the liquid are mixed into a paste,
the handpiece further being capable of dispensing the paste from the chamber, **characterized in that** the mixing occurs through an ultrasonic vibration.

2. The handpiece of claim 1, wherein the chamber is a capsule.

3. A dental material applicator system, comprising:
a segmented capsule having a powder and a liquid,
a handpiece according to claim 1,
wherein the handpiece is capable of being triggered in order for the capsule to be activated such that the powder and the liquid are mixed into a paste, and
wherein the mixed paste is extruded from the handpiece.

4. The dental material applicator system according to claim 3, wherein the system includes a package communication system wherein the capsule has an RFID (radio frequency identification) label that can be decoded by a reader contained in the handpiece which identifies the mixing program to be used for that particular product.

5. The dental material applicator system according to claim 3 or 4, wherein the system includes a vacuum within the handpiece to impart a vacuum tc the interior of the capsule.

6. The dental material applicator system according to any of claims 3 to 5, wherein the system includes internal ribs in the mixing compartment that promote mixing action by sheering the material over the obstruction.

7. The dental material applicator system according to any of claims 3 to 6, wherein the system includes a pre-programmed pressure relief feature that when paste is being delivered and the user stops pressing the apply button, the drive shaft automatically backs up a small amount which is sufficient to relieve pressure and prevent paste from oozing out of the dispensing tip.

8. The dental material applicator system according to any of claims 3 to 7, wherein the system includes a pressure sensing limit capability such as a motor current limit detection which prevents the device from over pressurizing the capsule during activation and dispensing.

9. The dental material applicator system according to any of claims 3 to 8, wherein the system includes an automatic unload function, where after the material is dispensed and the drive shaft cannot advance any further it retracts and unlocks the handpiece compartment door automatically, so that the empty capsule may be removed.

## Patentansprüche

1. Handstück, umfassend:
(i) eine Kammer mit einem Pulver und einer Flüssigkeit,
(ii) das Handstück, das in der Lage ist, die Kammer so zu aktivieren, dass das Pulver und die Flüssigkeit zu einer Paste gemischt werden,
wobei das Handstück ferner in der Lage ist, die Paste aus der Kammer abzugeben, **dadurch gekennzeichnet, dass** das Mischen durch eine Ultraschallschwingung erfolgt.

2. Handstück nach Anspruch 1, wobei die Kammer eine Kapsel ist.

3. Applikatorsystem für Dentalmaterial, umfassend:
eine segmentierte Kapsel mit einem Pulver und einer Flüssigkeit,
ein Handstück nach Anspruch 1,
wobei das Handstück ausgelöst werden kann, damit die Kapsel aktiviert wird, sodass das Pulver und die Flüssigkeit zu einer Paste gemischt werden, und
wobei die gemischte Paste aus dem Handstück extrudiert wird.

4. Applikatorsystem für Dentalmaterial nach Anspruch 3, wobei das System ein Paketkommunikationssystem beinhaltet, wobei die Kapsel ein RFID(Radiofrequenz-Identifikations)-Etikett aufweist, das durch einen Leser decodiert werden kann, der in dem Handstück enthalten ist, wodurch das für dieses bestimmte Produkt zu verwendende Mischprogramm identifiziert wird.

5. Applikatorsystem für Dentalmaterial nach Anspruch 3 oder 4, wobei das System ein Vakuum innerhalb des Handstücks beinhaltet, um ein Vakuum im Inneren der Kapsel zu erzeugen.

6. Applikatorsystem für Dentalmaterial nach einem der Ansprüche 3 bis 5, wobei das System innere Rippen in der Mischkammer beinhaltet, die die Mischwirkung durch eine Scherung des Materials über das Hindernis fördern.

7. Applikatorsystem für Dentalmaterial nach einem der Ansprüche 3 bis 6, wobei das System eine vorprogrammierte Druckentlastungsfunktion beinhaltet, indem, wenn Paste abgegeben wird und der Benutzer aufhört, die Applikationstaste zu drücken, die Antriebswelle automatisch um eine kleine Strecke zurückfährt, was ausreicht, um eine Druckentlastung vorzunehmen und zu verhindern, dass Paste aus der Abgabespitze austritt.

8. Applikatorsystem für Dentalmaterial nach einem der Ansprüche 3 bis 7, wobei das System eine Druckerfassungs-Begrenzungsfähigkeit, wie beispielsweise eine Motorstrom-Begrenzungserkennung, beinhaltet, die verhindert, dass die Vorrichtung während der Aktivierung und Abgabe einen Überdruck in der Kapsel erzeugt.

9. Applikatorsystem für Dentalmaterial nach einem der Ansprüche 3 bis 8, wobei das System eine automatische Entladefunktion umfasst, wobei, nachdem das Material abgegeben wurde und die Antriebswelle nicht weiter vorrücken kann, die Antriebswelle zurückgezogen und die Klappe des Fachs an dem Handstück automatisch entriegelt wird, sodass die leere Kapsel entnommen werden kann.

## Revendications

1. Pièce à main, comprenant :
(i) une chambre ayant une poudre et un liquide,
(ii) la pièce à main capable d'activer la chambre de sorte que la poudre et le liquide sont mélangés en une pâte,
la pièce à main étant en outre capable de distribuer la pâte à partir de la chambre, **caractérisée en ce que** le mélange se produit par une vibration ultrasonore.

2. Pièce à main selon la revendication 1, dans laquelle la chambre est une capsule.

3. Système applicateur de matériau dentaire, comprenant :
une capsule segmentée ayant une poudre et un liquide,
une pièce à main selon la revendication 1,
dans lequel la pièce à main est capable d'être déclenchée afin que la capsule soit activée de telle sorte que la poudre et le liquide soient mélangés en une pâte, et
dans lequel la pâte mélangée est extrudée de la pièce à main.

4. Système applicateur de matériau dentaire selon la revendication 3, dans lequel le système comporte un système de communication d'emballage dans lequel la capsule a une étiquette RFID (identification par radiofréquence) qui peut être décodée par un lecteur contenu dans la pièce à main qui identifie le programme de mélange à utiliser pour ce produit particulier.

5. Système applicateur de matériau dentaire selon la revendication 3 ou 4, dans lequel le système comporte un vide au sein de la pièce à main afin de communiquer un vide à l'intérieur de la capsule.

6. Système applicateur de matériau dentaire selon l'une quelconque des revendications 3 à 5, dans lequel le système comporte des nervures internes dans le compartiment de mélange qui favorisent l'action de mélange par cisaillement du matériau sur l'obstruction.

7. Système applicateur de matériau dentaire selon l'une quelconque des revendications 3 à 6, dans lequel le système comporte une caractéristique de relâchement de pression préprogrammée avec laquelle, lorsque la pâte est distribuée et que l'utilisateur cesse d'appuyer sur le bouton d'application, l'arbre d'entraînement refoule automatiquement une petite quantité qui est suffisante pour relâcher la pression et empêcher la pâte de suinter hors de l'embout de distribution.

8. Système applicateur de matériau dentaire selon l'une quelconque des revendications 3 à 7, dans lequel le système comporte une capacité de limite de détection de pression telle qu'une détection de limite de courant de moteur qui empêche le dispositif d'appliquer une pression excessive à la capsule pendant l'activation et la distribution.

9. Système applicateur de matériau dentaire selon l'une quelconque des revendications 3 à 8, dans lequel le système comporte une fonction de déchargement automatique, dans laquelle, après que le matériau a été distribué et que l'arbre d'entraînement ne peut plus avancer, il se rétracte et déverrouille automatiquement la porte du compartiment de la pièce à main, de sorte que la capsule vide puisse être retirée.
